## Europäisches Patentamt
## European Patent Office
## Office européen des brevets

(11) Veröffentlichungsnummer: **0 115 743**
A1

## EUROPÄISCHE PATENTANMELDUNG

(21) Anmeldenummer: 83810598.9

(22) Anmeldetag: 16.12.83

(51) Int. Cl.³: **B 01 D 11/04**, B 01 L 3/14

(30) Priorität: 07.01.83 FR 8300177

(43) Veröffentlichungstag der Anmeldung: 15.08.84
Patentblatt 84/33

(84) Benannte Vertragsstaaten: **AT BE CH DE FR GB IT LI LU NL SE**

(71) Anmelder: **Büchi Laboratoriums-Technik AG,
Meierseggstrasse 40, CH-9230 Flawil (CH)**

(72) Erfinder: **Jourdan, Phillppe Louis Yves, 8, boulevard de la République, F-92260 Fontenay aux Roses (FR)**

(74) Vertreter: **Wenger, René et al, Hepp & Partner AG
Marktgasse 18, CH-9500 Wil (CH)**

(54) **Verfahren und Vorrichtung für die flüssig-flüssig Extraktion.**

(57) Die beiden flüssigen Phasen (24 und 25) werden in einen ruhenden Behälter gegeben, der beispielsweise die Form eines Dekantiergefäßes (1) mit einem Hahnen (3) am unteren Ende haben kann. Anschließend wird der Behälter um seine Mittelachse (A1) derart in Drehung versetzt, daß die beiden Phasen (24 und 25) an der Innenwandung des Behälters hochsteigen. Nach dem Erreichen des Extraktionsgleichgewichts wird der Behälter wieder zum Stillstand gebracht und die beiden Phasen können dekantiert werden. Für die Beschleunigung des Dekantiervorgangs und zum Spülen des Behälters kann der gesamte Behälter noch einer zweiten Rotationsbewegung um eine Achse ausgesetzt werden, welche exzentrisch zur Mittelachse des Behälters verläuft. Durch das Hochsteigen der beiden flüssigen Phasen (24 und 25) unter der Einwirkung der Zentrifugalkraft wird eine intensive Berührung der beiden Phasen und eine gute innere Durchmischung bei laminarer Strömung erzielt. Die Bildung einer Emulsion wird vermieden und die Berührung der Phasen mit Umgebungsluft wird auf ein Minimum reduziert.

0115743

Büchi Laboratoriums-Technik AG, Flawil, Schweiz

## Verfahren und Vorrichtung für die flüssig-flüssig Extraktion

Die Erfindung betrifft ein Verfahren und eine Vorrichtung für die flüssig-flüssig Extraktion mit zwei mengenmässig bestimmten Flüssigkeitsproben unterschiedlicher Dichte und geringer Mischbarkeit. Ein derartiges Verfahren erlaubt mittels organischen Lösungsmitteln die Extraktion von Substanzen, welche in einer wässrigen Flüssigkeit gelöst sind. Das Verfahren ist insbesondere für analytische und präparative Laborzwecke von grosser Bedeutung.

Wie der Name des Verfahrens bereits anzeigt, werden dabei zwei Flüssigkeiten eingesetzt, welche eine sehr schwache gegenseitige Lösbarkeit aufweisen, wie z.B. eine wässrige Lösung und ein organisches Lösungsmittel oder eine Mischung derartiger Lösungsmittel.

Es sind bereits Extraktionsverfahren für den industriellen Dauerbetrieb bekannt, bei denen sich die beiden Flüssigkeiten im Gleichstrom oder im Gegenstrom in einer Zentrifuge berühren. So beschreibt beispielsweise bereit die US-PS 1,575,116 Jones eine Vorrichtung, bei der die beiden Flüssigkeiten kontinuierlich einem rotierenden Zylinder zugeführt werden. Im Innern des Zylinders sind quer zur Rotationsachse verlaufende Schikanen eingebaut. Beim Passieren dieser Schikanen kommen die beiden Phasen in einen besonders engen Kontakt, wobei an dieser Stelle eine turbulente Strömung eintritt. Im US-PS Nr. 2,705,594 Brewer ist ein ebenfalls kontinuierliches Extraktionsverfahren beschrieben, bei dem die beiden Flüssigkeiten im Gegenstrom einer Ringkammer zugeführt werden, welche durch einen äusseren und einen inneren Zylinder gebildet wird. Die beiden Zylinder rotieren um eine vertikale Achse, jedoch mit unterschiedlicher Geschwindigkeit, sodass zwischen den beiden Phasen eine turbulente Strömung herrscht.

Beide Verfahren eigenen sich nicht für Laborzwecke, wo mit geringen Mengen ein optimaler Wirkungsgrad erzielt werden muss. Die kontinuierlichen Verfahren haben den Nachteil, dass grössere Mengen der Flüssigkeiten gar nicht miteinander in Kontakt kommen und dadurch die Extraktion einen relativ schlechten Wirkungsgrad aufweist, sodass sie in mehreren Stufen wiederholt werden muss. Ausserdem findet die Extraktion nur in einem turbulenten Strömungsbereich statt, was jedoch zu einer nichterwünschten Emulsifikation der Flüssigkeiten führt.

Für Laborzwecke ist es bereits bekannt, die beiden Flüssigkeitsproben in ein zylindrisch/konisches Gefäss aus Glas zu geben, welches auf der Unterseite einen Hahnen und auf der Oberseite eine verschliessbare Öffnung zum Einfüllen der Flüssigkeiten aufweist. Die Extraktion wird durch ein intensives Schütteln von Hand oder mit mechanischen Mitteln erreicht. Dieser Schüttelvorgang bewirkt, dass einerseits der Oberflächenkontakt der beiden Flüssigkeiten intensiviert wird und das anderseits die sich berührenden Flüssigkeitsmengen laufend erneuert bzw. bewegt werden. Die Schüttelbewegung muss während einer Zeitspanne ausgeführt werden, die erforderlich ist, bis sich die Solvate zwischen den beiden flüssigen Phasen im Verhältnis ihrer Lösbarkeit in den beiden Flüssigkeiten aufgeteilt haben. Diese Zeitspanne wird im folgenden Gleichgewichtszeit genannt. Sie hängt weitgehend von der Art und der Intensität der Bewegung ab.

Bei diesem labormässigen Extraktionsverfahren werden die beiden Flüssigkeiten in eine Vielzahl tropfenförmiger Einzelelemente aufgeteilt, ohne dass dabei eine Mischung der beiden Phasen eintritt. Nach dem Schütteln des Gefässes werden die beiden Phasen durch Dekantieren voneinander getrennt. Zu diesem Zweck wird das Gefäss in vertikaler Lage in eine Halterung gestellt, sodass die beiden Phasen durch den Hahnen am unteren Ende hintereinander entnommen werden können.

Auch das vorstehend beschriebene Verfahren weist zahlreiche Nachteile auf. So dauert der Extraktionsvorgang relativ lange und ist verhältnismässig kompliziert. Weiterhin werden bei der intensiven Schüttelbewegung die beiden Flüssigkeiten mit der Umgebungsluft in Kontakt gebracht, was verschiedene chemische Reaktionen der in der wässrigen Lösung vorhandenen Substanzen begünstigt. So kann beispielsweise eine Oxidation eintreten, welche durch Verunreinigungen der Mischung verursacht wird. Schliesslich führt die intensive Schüttelbewegung auch zu einer Emulsifikation der beiden Flüssigkeiten, wodurch der Kontakt zwischen den beiden Flüssigkeiten reduziert wird und wodurch in einzelnen Fällen die Trennung der beiden Phasen nicht mehr möglich ist.

Es ist daher Aufgabe der Erfindung ein Verfahren und eine Vorrichtung der eingangs genannten Art zu schaffen, mit denen eine rasche labormässige Extraktion mit hohem Wirkungsgrad möglich ist, ohne dass dabei die genannten Nachteile in Kauf genommen werden müssen. Diese Aufgabe wird in verfahrensmässiger Hinsicht durch die Merkmale im Kennzeichen von Patentanspruch 1 und in vorrichtungsmässiger Hinsicht durch die Merkmale im Kennzeichen von Patentanspruch 5 gelöst.

Durch die anstelle der Schüttelbewegung tretende Drehbewegung des Behälters wird eine Emulsifikation der beiden Phasen zuverlässig vermieden. Trotzdem ist ein intensiver Kontakt und eine Oberflächenumwälzung zwischen den beiden Phasen gewährleistet, da sich die räumliche Konfiguration der beiden Flüssigkeitsphasen beim Beschleunigen des Behälters verändert. Während beim ruhenden Behälter die Phasentrennung in einer horizontalen Ebene erfolgt, verändert sich diese Trennebene mit zunehmender Geschwindigkeit zuerst konisch bis sie sich einer etwa zylindrischen Konfiguration annähert. Dabei vergrössert sich ersichtlicherweise die Berührungsfläche zwischen den beiden Phasen. Der Wirkungsgrad der Extraktion wird durch die komplizierte Relativbewegung der beiden Phasen beim Beschleunigen des Behälters erheblich verbessert. Ein weiterer Vorteil des Verfahrens besteht darin, dass die unten, bzw. beim rotierenden Behälter aussen liegende Phase mit der im Behälter vorhandenen Umgebungsluft nicht in Berührung kommt. Trotz der intensiven Berühung der beiden Phasen bei gleichzeitiger Umwälzung innerhalb den einzelnen Phasen ist die Aufrechterhaltung einer laminaren Strömung möglich. Dadurch kann die Extraktion auch mit Flüssigkeiten vorgenommen werden, welche eine gewisse Neigung zum Bilden einer Emulsion aufweisen.

Der Wirkungsgrad der Extraktion kann auf besonders einfache Weise dadurch verbessert werden, wenn zwischen dem Beginn und dem Ende der Drehbewegung der Behälter abwechslungsweise mit unterschiedlichen Geschwindigkeiten gedreht wird. Dadurch kann ein wiederholtes Auf- und Absteigen der beiden Phasen entlang der Innenwandung erzielt werden, wobei sich die Konfiguration der Trennfläche zwischen den beiden Phasen laufend verändert. Dadurch wird aber auch die Umwälzung innerhalb der beiden Phasen wesentlich verbessert.

Ein weiterer Vorteil, der das Extraktionsverfahren verbessert und beschleunigt kann erzielt werden, wenn wenigstens am Ende des Extraktionsvorganges der Behälter um eine parallele, jedoch exzentrisch zur Behältermittelachse verlaufende Achse einer zweiten Rotationsbewegung unterworfen wird. Dabei wird der Behälter vorteilhaft um die exzentrische Achse mit einer solchen Geschwindigkeit gedreht, dass sich die beiden Phasen asymmetrisch auf eine Seite des Behälters verlagern und dabei auf der Behälterinnenwand ein Niveau erreichen, welches über demjenigen bei der symmetrischen Drehbewegung liegt. Auf diese Weise erfolgt eine Art Spülung der Behälterinnenwand, wobei einzelne auf der Innenwand haf-

0115743

tende Tropfen erfasst werden. Die asymmetrische Drehbewegung des Behälters beschleunigt ausserdem den Dekantiervorgang nach dem Abbremsen des Behälters.

Die erfindungsgemässe Vorrichtung hat den Vorteil, dass die Extraktion nicht bei einer unkontrollierten Bewegung wie z.B. beim Schütteln stattfindet. Zeit, Drehzahl und Beschleunigung können mit Hilfe der Antriebsvorrichtung genau definiert und gegebenenfalls verändert werden. So ist es möglich, mehrere Proben unter genau den gleichen Bedingungen zu extrahieren. Es können ausserdem für die Extraktion Behälter verschiedener Konfiguration auf einfachste Weise in die Vorrichtung eingespannt werden.

Das Einspannen der Behälter erfolgt auf besonders einfache Weise, indem die Haltevorrichtung zur Aufnahme einer zylindrischen Partie des Behälters eine Hülse mit einer sich nach unten konisch verjüngenden Öffnung aufweist, wenn in die Öffnung wenigstens zwei konische Backen einsetzbar sind und wenn die Backen mittels einem auf die Hülse schraubbaren Feststellring an die zylindrische Partie des Behälters pressbar sind. Mit dem Feststellring ist ersichtlicherweise die Einspannkraft regulierbar, sodass verschiedenartige zylindrische Partien wie z.B. Glasrohre, Kunststoffrohre usw. zuverlässig eingespannt werden können. Die Haltevorrichtung lässt sich mit wenigen Handgriffen demontieren, was beispielsweise die Reinigung der Vorrichtung erleichtert.

Die symmetrische und die asymmetrische Drehbewegung lässt sich mit der gleichen Haltevorrichtung auf besonders einfache Weise erzielen, wenn die Hülse frei drehbar in einer oberen Drehscheibe gelagert ist, wobei die Drehachse der Hülse parallel versetzt angeordnet ist zur Achse der Drehscheibe, wenn die Hülse ein gleichachsig angeordnetes Zahnrad aufweist, welches mit einem Zahnkranz mit Innenverzahnung einer unteren Drehscheibe in Eingriff steht, deren Achse mit derjenigen der oberen Drehscheibe zusammenfällt. Ersichtlicherweise sind dadurch beide Drehbewegungen auf einem Drehscheibenpaar vereinigt. Wird die untere Drehscheibe angetrieben, so dreht sich die Hülse bzw. der darin eingespannte Behälter angetrieben durch den Zahnkranz und das Zahnrad um die eigene Achse. Wird dagegen die obere Drehscheibe angetrieben, so dreht sich die Hülse bzw. der Behälter exzentrisch um die Achse der oberen Drehscheibe.

Die beiden Drehscheiben werden vorteilhaft mittels Kugellager auf einer Halterung montiert und mittels Transmissionsriemen angetrieben. So kann beispielsweise der Transmissionsriemen für die obere Drehscheibe entfernt werden, wenn die exzentrische Drehbewegung nicht erwünscht ist. Die Kugellagerung gewährleistet optimale Laufeigenschaften.

Eine weitere Rationalisierung des Extraktionsvorganges kann erzielt werden, wenn der Behälter ein sich gegen unten etwa trichterförmig verjüngendes Dekantiergefäss mit einem Hahnen am unteren Ende ist und wenn das Dekantiergefäss gleichachsig mit einem zylindrischen Rohrstück verbunden ist, welches in die Haltevorrichtung einspannbar ist. Auf diese Weise bleibt das zylindrische Rohrstück immer in der Haltevorrichtung eingespannt, während das Dekantiergefäss beliebig entfernt oder ausgewechselt werden kann. Dekantiergefässe der genannten Art sind für den Laborbedarf im Handel bereits erhältlich, sodass nur noch die Verbindung mit dem zylindrischen Rohrstück auf geeignete Weise sichergestellt werden muss. Die Gefässe haben oben eine Öffnung mit einem geschliffenen Konus in welche das ebenfalls geschliffene untere Ende des zylindrischen Rohrstückes eingesetzt werden kann. Ein Fixieren des Dekantiergefässes ist beispielsweise mit einer Klammer auf an sich bekannte Weise möglich.

Ein besonders hoher Wirkungsgrad bei der Extraktion kann erzielt werden, wenn die Innenwandung des Behälters wenigstens teilweise mit in Achsrichtung verlaufenden Facetten versehen ist. Dadurch bewegt sich die beim rotierenden Behälter an der Innenwand anliegende Phase wellenförmig, wodurch eine besonders intensive Berührung mit der innern bzw. leichteren Phase stattfindet und wodurch auch eine optimale Umwälzung innerhalb der beiden Phasen gewährleistet wird. Selbstverständlich wäre es auch denkbar, anstelle

0115743

der Facetten etwa halbrunde Rippen oder Vertiefungen an der Innenwand des Behälters vorzusehen. Dabei ist stets darauf zu achten, dass durch diese Querschnittsveränderungen am Behälter keine turbulente Störmung zwischen den beiden Phasen verursacht wird.

Ein Ausführungsbeispiel der Erfindung ist in den Zeichnungen dargestellt und wird nachstehend näher erläutert. Es zeigen:

Figur 1    Den Behälter mit seinen beiden Drehachsen,

Figur 2    einen Teilquerschnitt durch die beiden Drehscheiben mit der Haltevorrichtung,

Figur 3    die Haltevorrichtung gemäss Figur 2 in vergrösserter Darstellung,

Figur 4    zwei Teilbacken der Haltevorrichtung,

Figur 5    eine perspektivische Ansicht der Haltevorrichtung mit Drehscheiben und Antriebsvorrichtung,

Figur 6    eine Seitenansicht auf die in einem Gehäuse untergebrachte Vorrichtung,

Figur 7    einen Querschnitt durch einen Behälter mit den beiden Phasen während der Rotation und

Figur 8    ein abgewandeltes Ausführungsbeispiel eines Behälters.

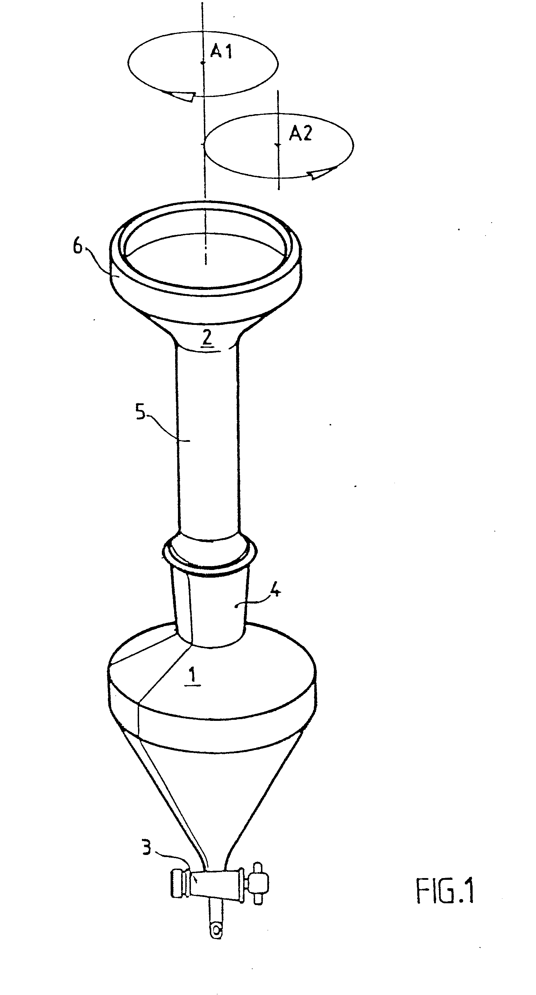

Gemäss Figur 1 besteht der Behälter aus zwei Teilen, welche während der Dauer des Extraktionsvorganges zusammengehalten werden. Den unteren Teil bildet ein Dekantiergefäss 1, in dem der eigentliche Extraktionsvorgang stattfindet. Dieses Gefäss hat eine konisch/zylindrische Konfiguration und weist am unteren Ende einen Hahnen 3 auf, der ein Dekantieren der beiden Flüssigkeiten am Ende des Extraktionsvorganges erlaubt. Am oberen Ende des Gefässes ist in der Form eines konischen Verbindungsabschnittes 4 eine Öffnung vorgesehen durch welche die Flüssigkeiten eingeführt werden können, wobei das Verbindungsrohr gleichzeitig zum Befestigen des Gefässes dient.

Den oberen Teil der Anordnung bildet ein Trichterstück 2, welches in erster Linie die Funktion hat, das Dekantiergefäss 1 festzuhalten wie nachstehend noch beschrieben ist. Das Trichterstück 2 besteht aus einer zylindrischen Partie 5 an der es in eine Haltevorrichtung eingespannt wird, wie nachstehend ebenfalls noch im Detail beschrieben ist, sowie aus einer konischen Partie 6, die den eigentlichen Trichter bildet, durch den die beiden Flüssigkeitsproben in das Dekantiergefäss eingefüllt werden können.

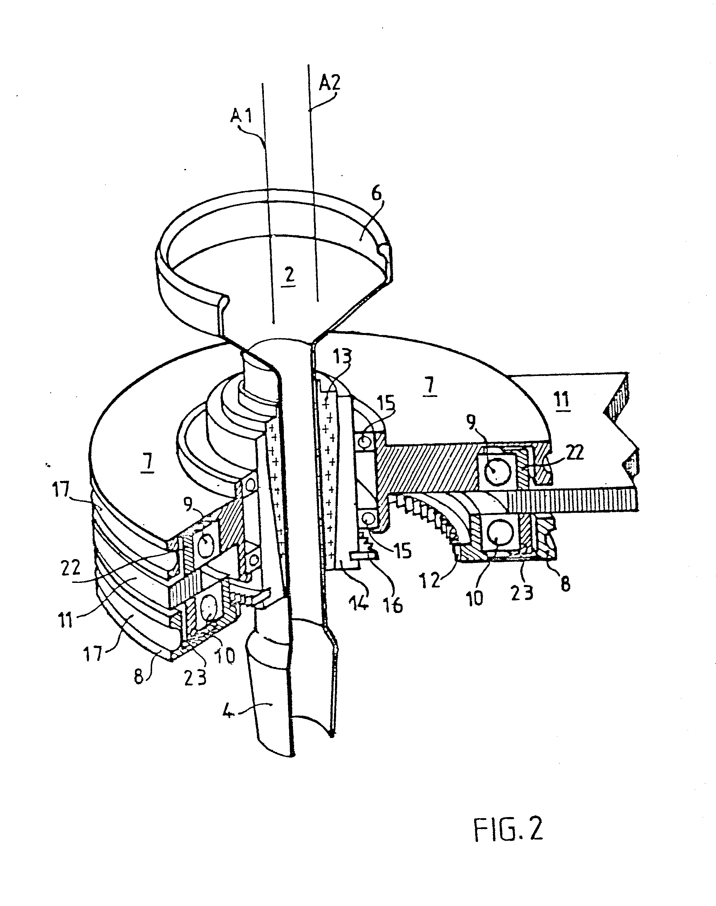

Trichterstück 2 und Dekantiergefäss 1 sind an einem Verbindungsabschnitt fest miteinander verbunden, wobei dieser Verbindungsabschnitt beispielsweise aus einem konisch geschliffenen Stutzen und einem konischen Stopfen bestehen kann, wie dies beispielsweise in Figur 2 angedeutet ist. Stutzen und Stopfen können in an sich bekannter Weise mit einer in den Zeichnungen nicht dargestellten Klammer zusammengehalten werden.

Figur 2 zeigt ein Beispiel einer Anordnung zum Drehen des in Figur 1 dargestellten Behälters um zwei Rotationsachsen A1 und A2. Die Anordnung besteht im wesentlichen aus einer oberen Drehscheibe 7 und aus einer unteren Drehscheibe 8 welche auf einer festen Halterung 11 gedreht werden können. Auf der Halterung 11 können die beiden Drehscheiben mit Hilfe der Kugellager 9 und 10 um ihre gemeinsame Drehachse A2 gedreht werden.

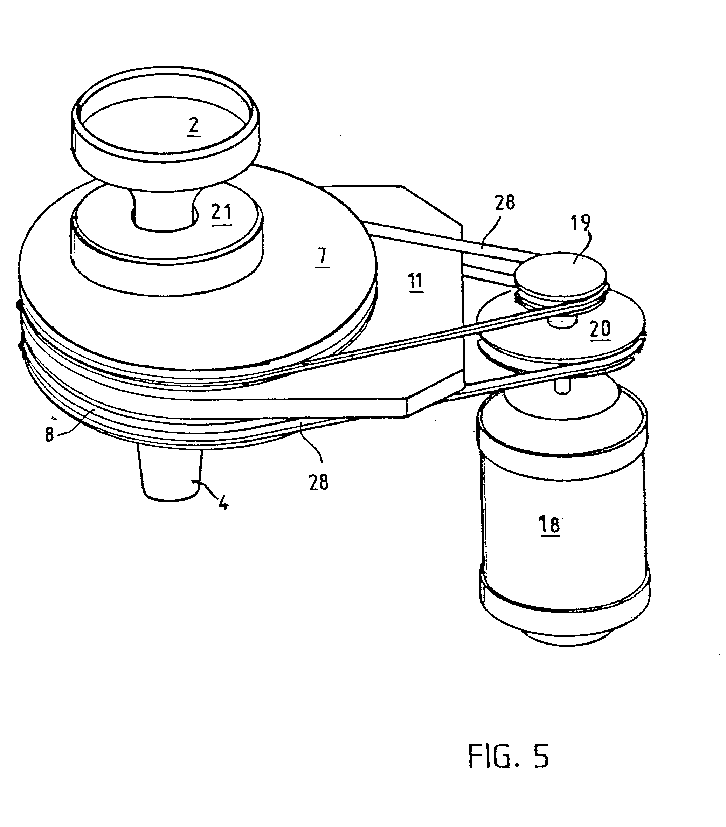

Diese Kugellager 9 und 10 sind auf der Halterung 11 mittels Haltebriden 22 und 23 befestigt. Die Halterung 11 ist im dargestellten Ausführungsbeispiel eine Platte, welche ersichtlicherweise im Laufbereich der beiden Kugellager 9 und 10 eine Öffnung aufweisen muss. Die beiden Drehscheiben 7 und 8 können beide durch eine Antriebsvorrichtung angetrieben werden, bestehend aus einem Motor 18 mit seinen Antriebsrädern 19 und 20 sowie aus den beiden Transmissionsriemen 28 welche die Drehscheiben 7 und 8 mit den Antriebsrädern 19 und 20 verbinden. Diese Anordnung ist beispielsweise in Figur 5 dargestellt.

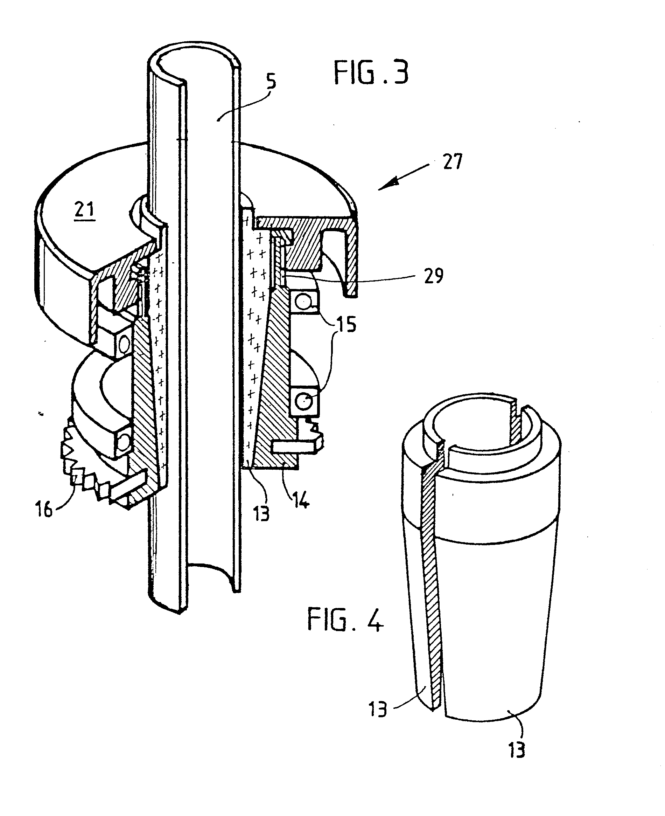

Die beiden Drehscheiben 7 und 8 übernehmen im beschriebenen Extraktionsverfahren zwei verschiedene Aufgaben. Die obere Drehscheibe 7 dient dazu, das Dekantiergefäss an seinem Trichterstück 2 mit Hilfe einer drehbaren Haltevorrichtung 27 festzuhalten, welche in Figur 3 separat dargestellt ist. Die Haltevorrichtung 27 hat einerseits die Funktion den Extraktionsbehälter festzuhalten und ihn anderseits um seine Symmetrieachse A1 zu drehen. Die Haltevorrichtung 27 ist derart in der oberen Drehscheibe 7 angeordnet, dass ihre Achse A1 zur Mittelachse A2 der Drehscheibe 7 exzentrisch versetzt ist. Die genaue Funktion der Haltevorrichtung 27 ist aus den Figuren 3 und 4 ersichtlich. Die Haltevorrichtung weist eine Hülse 14 auf, welche an der Aussenseite einen zylindrischen Abschnitt und auf der Innenseite eine konische Öffnung aufweist. Auf dem zylindrischen Abschnitt sind zwei Kugellager 15 angeordnet, welche in eine korrespondierende Bohrung an der oberen Drehscheibe 7 passen. An den Kugellagern 15 ist die Haltevorrichtung 27 frei drehbar in der oberen Drehscheibe 7 gelagert.

Das Trichterstück 2 wird mit Hilfe von zwei konischen Backen 13 gehalten, welche zusammen mit einem Feststellring 21 eine Art Spannfutter bilden. Aufgrund der Entfernbarkeit der beiden Backen 13 beim völligen Aufschrauben des Feststellrings 21 ist es ersichtlicherweise möglich, das Trichterstück 2 in die Haltevorrichtung einzuführen oder zu entfernen. Zum Feststellen des Trichterstückes 2 an seinem zylindrischen Abschnitt 5 werden die beiden Backen 13 in die Hülse 14 eingeschoben. Anschliessend wird der Feststellring 21 auf das Gewinde 29, bestehend aus einem Aussengewinde an der Hülse 14 und einem Innengewinde am Feststellring 21 aufgeschraubt. Dabei werden die beiden Backen 13 durch den Feststellring 21 in die konische Öffnung der Hülse 14 und gleichzeitig an die Aussenwandung der zylindrischen Partie 5 gepresst. Um die Verwendung eines Trichterstücks 2 aus Glas zu ermöglichen, sind die beiden Backen 13 vorteilhaft aus einem elastischen Material gefertigt wie z.B. aus Nylon oder aus Polyäthylen. Anstelle der halbschalenförmigen Backen 13 wäre es selbstverständlich auch denkbar einfache Keile zu verwenden. Der Feststellring 21 bildet gleichzeitig den oberen Abschluss der Haltevorrichtung 27 und schützt die darunter liegenden Kugellager 15 vor Verschmutzung.

Wie aus Figur 3 ebenfalls ersichtlich, ist am unteren Ende der Hülse 14 ein Zahnrad 16 angeordnet, dessen Achse mit der Drehachse der Hülse zusammenfällt. Die untere Drehscheibe 8 ist mit einem Zahnkranz 12 mit einer Innenverzahnung versehen, deren Zähne in das Zahnrad 16 der Hülse 14 eingreifen. Dadurch entsteht ein Getriebe, mit dessen Hilfe die Haltevorrichtung 27 bzw. der darin eingespannte Extraktionsbehälter um die Achse A1 drehbar ist.

Die beiden Drehscheiben 7 und 8 sind auf der Aussenseite mit Laufrillen 17 versehen in welche die Transmissionsriemen 28 wie in Figur 5 dargestellt eingesetzt werden können. Zwischen den beiden Antriebsrädern 19 und 20 ist eine nicht dargestellte Einwegkupplung nach dem Kugel- oder Sperrklinkenprinzip angeordnet, welche das Drehen eines der Antriebsräder je nach der gewählten Drehrichtung des Motors 18 ermöglicht. Auf diese Weise ist es möglich, mit einem einzigen Motor zuerst die Haltevorrichtung 27 und damit das Extraktionsgefäss um die eigene Achse A1 zu drehen und anschliessend die ganze Anordnung exzentrisch um die Achse A2 zu drehen in dem lediglich die Drehrichtung des Motors umgekehrt wird.

In Funktion wird die in Figur 1 dargestellte Anordnung sukzessive den folgenden zwei Bewegungen unterworfen:

1. In der ersten Phase, welche nachstehend Extraktionsphase benannt wird, dreht der Motor 18 die untere Drehscheibe 8 mit Hilfe des Antriebsrades 20 und dem diesem zugeordneten Transmissionsriemen 28. Dadurch dreht sich die Haltevorrichtung 27 und damit das Trichterstück 2 und das Dekantiergefäss 1 um

ihre gemeinsame Drehachse A1. Der Antrieb erfolgt dabei über die Getriebeteile 12 und 16. Der Durchmesser der Getriebeteile bzw. der Durchmesser der Drehscheibe 8 und des Antriebsrades 20 kann derart gewählt werden, dass die Drehzahl der Vorrichtung annähernd der Drehzahl des Motors entspricht.

2. In der zweiten Phase, welche nachstehend Spülphase genannt wird, treibt der Motor 18 die obere Drehscheibe 7 über das Antriebsrad 19 und den diesem zugeordneten Transmissionsriemen. Dadurch wird die Haltevorrichtung 27 und damit das Dekantiergefäss 1 um die Achse A2 gedreht wobei die Geschwindigkeit aufgrund der gewählten Durchmesser der oberen Drehscheibe 7 und des Antriebsrades 19 etwas geringer ist als bei der vorhergehenden Drehbewegung.

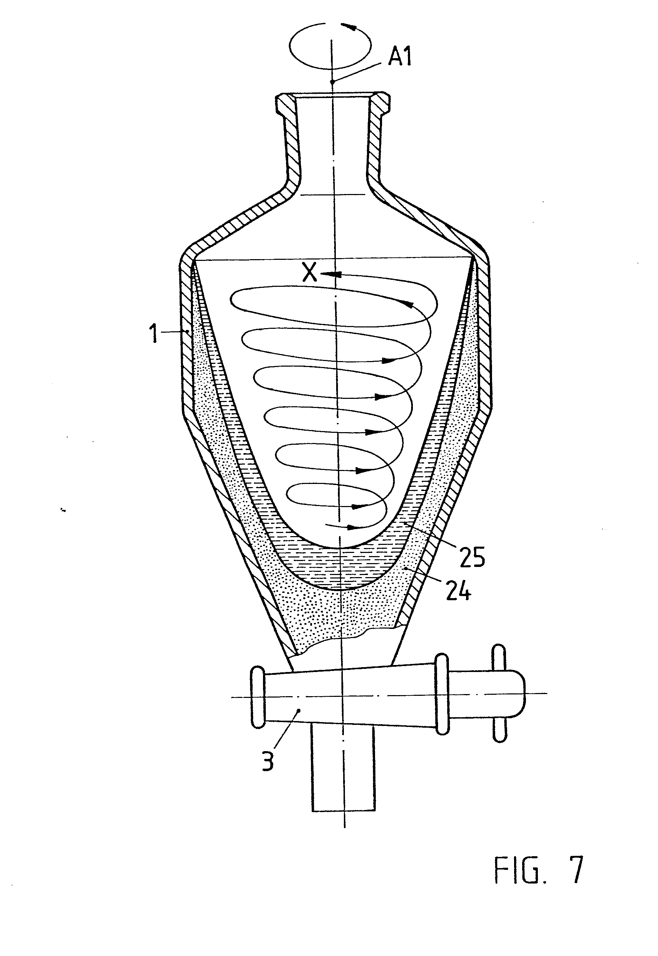

Der Extraktionsvorgang wird nachstehend unter Bezugnahme auf Figur 7 genauer beschrieben. Zuerst werden die beiden Flüssigkeiten über das Trichterstück 2 in das ruhende Dekantiergefäss 1 eingefüllt. Dort bildet sich aufgrund der unterschiedlichen Dichte der beiden Flüssigkeiten eine untere Phase 24 und eine leichtere obere Phase 25. Anschliessend wird die Haltevorrichtung 27 wie oben bereits beschrieben um die Achse A1 gedreht. Die Extraktionsphase dauert solange, bis die Lösungen im Gleichgewicht sind. Während der Spülphase wird die Haltevorrichtung 27 einer etwas langsameren Rotationsbewegung um die Achse A2 ausgesetzt. Beim Beschleunigen aus der Ruhestellung bis auf eine bestimmte Drehzahl während der Extraktionsphase beginnen die beiden Phasen 24 und 25 aufgrund der Zentrifugalkraft an der Innenwandung des Gefässes 1 hochzusteigen. Naturgemäss befindet sich dabei die schwerere Phase 24 relativ zur Mittelachse A1 auf der Aussenseite und die leichtere Phase 25 auf der Innenseite. Da die beiden Flüssigkeiten sich ebenfalls um die Achse A1 zu drehen beginnen entsteht eine schraubenförmige Bewegung, welche in Pfeilrichtung X angedeutet ist. Während der gesamten Dauer der Drehbewegung verbleiben die beiden Phasen 24 und 25 an der Innenwand des Dekantiergefässes 1. Durch die auf diese Weise auf die beiden Phasen einwirkende Zentrifugalkraft entsteht ein besonders intensiver Kontakt zwischen den beiden Phasen. Bereits aufgrund geringfügiger Unregelmässigkeiten in der Gefässwandung verbleiben die beiden Phasen relativ zueinander bzw. relativ zur Wandung des Gefässes nicht in einer Ruhestellung. Vielmehr findet eine dauernde Relativbewegung statt, welche etwa radial verläuft. Auch während des Beschleunigungsvorganges beim Hochsteigen entlang der trichterförmigen unteren Partie des Dekantiergefässes 1 findet eine Relativbewegung zwischen den beiden Phasen einerseits und der Gefässwandung anderseits statt. Durch diese Relativbewegung der beiden Flüssigkeitslagen entsteht ein grosser Oberflächenkontakt zwischen den beiden Phasen und eine gute Durchmischung innerhalb der beiden Phasen, sodass das Extraktionsgleichgewicht in einer äusserst kurzen Zeit erreicht wird, welche praktisch der Zeit entspricht, welche erforderlich ist um das ganze System in Rotation zu versetzen. Durch die praktisch laminar verlaufende Strömung zwischen den beiden Phasen 24 und 25 wird die Bildung einer Emulsion ausgeschlossen, sodass nach der Extraktion eine saubere Trennung der beiden Phasen möglich ist. Ersichtlicherweise wird auch eine Durchmischung der beiden Phasen mit Umgebungsluft verhindert, wodurch unerwünschte chemische Reaktionen ausgeschlossen werden.

Während der Spülphase bewirkt die Drehung um die Achse A2 während einer relativ kurzen Zeitspanne, dass sich die beiden flüssigen Phasen 24, 25 auf einer Seite des Dekantiergefässes 1 sammeln und die gesamte Oberfläche des Gefässes auskehren. Durch diese Bewegung wird einerseits das abschliessende Dekantieren der beiden Phasen beschleunigt und anderseits werden dabei an der Innenwand des Gefässes verbleibende Tropfen weggespült. Dadurch wird nicht nur die Dekantierzeit verkürzt, sondern es wird auch verhindert, dass das Gefäss in einer zusätzlichen Operation gereinigt werden muss, bevor die nächste Probe extrahiert werden kann. Die Spülung der Innenwand wird dadurch sichergestellt, dass bei der zweiten Drehbewegung um die Achse A2 die beiden Flüssigkeiten ein Niveau erreichen, welches über demjenigen des Flüssigkeitsniveaus bei

- 13 -

der Drehbewegung um die Achse A1 liegt.

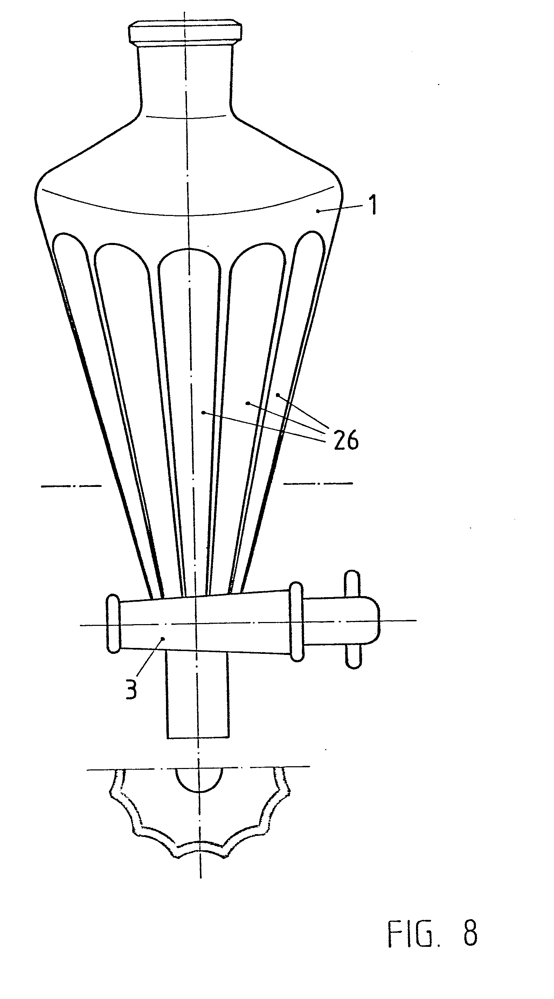

Die Relativbewegung bei der Extraktionsphase zwischen den beiden Phasen 24, 25 kann durch ein Dekantiergefäss verbessert werden, wie es in Figur 8 dargestellt ist. In Achsrichtung verlaufende Facetten 26 bewirken eine dauernde radiale Wellenbewegung der beiden flüssigen Phasen. Anstelle der Facetten 26 wären auch andere geeignete Vertiefungen oder Erhöhungen relativ zur Mittelachse A1 am Gefäss denkbar.

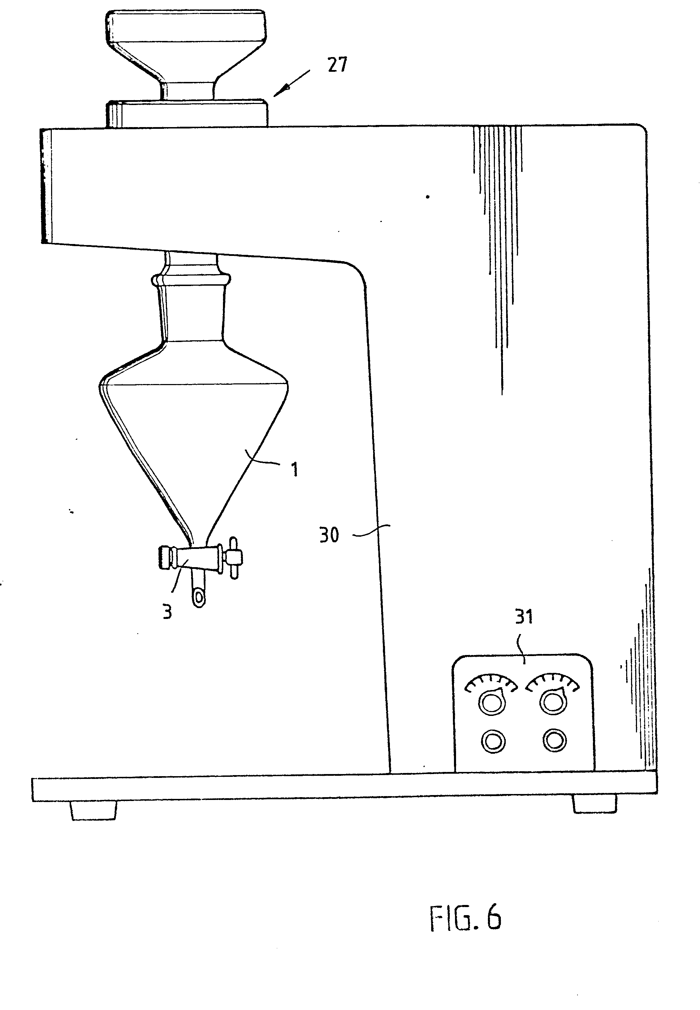

In Figur 6 ist eine erfindungsgemässe Vorrichtung dargestellt, welche in einem Gehäuse 30 untergebracht ist. Am Gehäuse ist eine Bedienungsvorrichtung 31 zum Steuern der Antriebsvorrichtung angeordnet. Die Haltevorrichtung wird vorzugsweise in einer derartigen Höhe angeordnet, dass unter das Dekantiergefäss 1 ein Gefäss zur Aufnahme der beiden Phasen geschoben werden kann. Selbstverständlich muss das Dekantiergefäss 1 bzw. der Extraktionsbehälter nicht unterhalb der Haltevorrichtung 27 angeordnet sein. Es wäre auch denkbar, das Gefäss oberhalb der Haltevorrichtung zu befestigen, was in bestimmten Fällen, insbesondere bei relativ grossen Behältern für präparative Zwecke sogar zweckmässig sein wird. In einem derartigen Fall könnte die Hülse 14 der Haltevorrichtung 27 direkt der Konfiguration des Behälters angepasst sein. Um eine reibschlüssige Verbindung zwischen Hülse und Behälter zu gewährleisten könnte letzterer mit einem federnden Bügel von oben in die Hülse gepresst werden.

Als Motor 18 können verschiedene Typen eingesetzt werden, vorausgesetzt, dass der Drehsinn geändert werden kann. Man könte beispielsweise auch einen Gleichstrommotor oder einen Asynchronmotor verwenden, für den eine elektronische Thyristorsteuerung auf einfachste Weise realisiert werden könnte. Der Steuerkreis kann beispielsweise aus zwei mit Triac versehenen Verzögerungskreisen bestehen, von denen der erste den Motor im entsprechenden Drehsinn für die Extraktionsphase während der erforderlichen Zeit anregt, während der zweite Verzögerungskreis den Motor im entgegengesetzten Drehsinn während der Spülphase ansteuert. Die Drehzahlen und die Dauer der beiden Phasen für einen kompletten Extraktionsvorgang werden aufgrund der folgenden Erwägungen bestimmt:

Bei der Extraktionsphase ist es in erster Linie erforderlich, eine Geschwindigkeit zu wählen, welche ausreicht, um die beiden Phasen 24, 25 zu veranlassen entlang der Gefässwandung hochzusteigen. In zweiter Linie ist zu beachten, dass die Extraktionszeit um so kürzer ist, je mehr diese Geschwindigkeit gesteigert wird. Die Erfahrung hat einen Geschwindigkeitsbereich ergeben, der von einigen Hundert Umdrehungen pro Minute bis zu einer oberen Limite führt, welche zum grossen Teil vom gesamten Volumen der zu bearbeitenden Lösungen abhängig ist. Für einen Behälter von etwa 500 ml wurde eine ausreichende Geschwindigkeit von etwa 1'000 U/Min. ermittelt. Für geringere Volumen können höhere Drehzahlen eingesetzt werden. Beim genannten Beispiel wurde für die Extraktionsphase eine Zeitspanne von 5 bis 10 Sek. als ausreichend ermittelt. Bezüglich der Spülphase ist der Drehbewegung Grenzen gesetzt durch die Massenträgheit der exzentrisch bewegten Teile. Die Spülphase ist sehr kurz und dauert nur solange wie erforderlich ist, um die beiden Flüssigkeitspolster auf einer Seite des Gefässes anzusammeln. So genügen beispielsweise zwei bis drei Umdrehungen mit einer Drehzahl von 100 U/Min.

PATENTANSPRÜCHE

1. Verfahren für die flüssig-flüssig Extraktion mit zwei mengenmässig bestimmten Flüssigkeitsproben unterschiedlicher Dichte
und geringer Mischbarkeit, d a d u r c h   g e -
k e n n z e i c h n e t,   d a s s   die beiden Flüssigkeitsproben in einen ruhenden Behälter (1) mit einer um eine vertikale Achse (A 1) etwa rotationssymmetrischen Innenkonfiguration gegeben werden, wobei die Proben entsprechend ihrer Dichte eine untere (24) und eine obere Phase (25) bilden,
dass anschliessend der Behälter um seine Achse (A 1) mit einer
derartigen Beschleunigung in eine Drehbewegung versetzt wird,
dass die beiden Phasen (24, 25) infolge der Zentrifugalkraft
an der Innenwandung des Behälters hochsteigen, wobei sie zwei
koaxiale Lagen bilden, welche bei laminarer Strömung aufeinander gleiten,
und dass schliesslich der Behälter wieder bis zum Stillstand
abgebremst und die beiden Phasen dekantiert werden.

2. Verfahren nach Anspruch 1,   d a d u r c h   g e k e n n -
z e i c h n e t,   d a s s   zwischen Beginn und Ende der Drehbewegung des Behälters ein wiederholtes Auf- und Absteigen der
beiden Phasen entlang der Innenwandung dadurch erreicht wird,
dass der Behälter mit unterschiedlichen Geschwindigkeiten gedreht wird.

3. Verfahren nach Anspruch 1 oder 2, d a d u r c h  g e k e n n -
z e i c h n e t,  d a s s  wenigstens am Ende des Extraktionsvorganges der Behälter um eine parallele, jedoch exzentrisch zur Behältermittelachse (A 1) verlaufende Achse (A2)
einer zweiten Rotationsbewegung unterworfen wird.

4. Verfahren nach Anspruch 3, d a d u r c h  g e k e n n -
z e i c h n e t,  d a s s  der Behälter um die exzentrische
Achse (A 2) mit einer solchen Geschwindigkeit gedreht wird,
dass sich die beiden Phasen asymmetrisch auf eine Seite des
Behälters verlagern und dabei auf der Behälterinnenwand ein
Niveau erreichen, welches über demjenigen bei der symmetrischen Drehbewegung liegt.

5. Vorrichtung für die flüssig-flüssig Extraktion, insbesondere
nach dem Verfahren gemäss Anspruch 1, d a d u r c h  g e -
k e n n z e i c h n e t,  d a s s  sie eine um eine vertikale Achse (A 1) drehbare Haltevorrichtung (27), eine Antriebsvorrichtung zum Drehen der Haltevorrichtung sowie einen kraftschlüssig mit der Haltevorrichtung (27) verbindbaren Behälter
(1) mit rotationssymmetrischer Innenkonfiguration aufweist.

6. Vorrichtung nach Anspruch 5, d a d u r c h  g e k e n n -
z e i c h n e t,  d a s s  die Haltevorrichtung zur Aufnahme
einer zylindrischen Partie (5) des Behälters (1) eine Hülse
(14) mit einer sich nach unten konisch verjüngenden Öffnung
aufweist, dass in die Öffnung wenigstens zwei konische Backen
(13) einsetzbar sind und dass die Backen mittels einem auf die
Hülse (14) schraubbaren Feststellring (21) an die zylindrische
Partie (5) des Behälters (1) pressbar sind.

7. Vorrichtung nach Anspruch 6, d a d u r c h  g e k e n n -
z e i c h n e t,  d a s s  die Hülse (14) frei drehbar in
einer oberen Drehscheibe (7) gelagert ist, wobei die Drehachse
(A 1) der Hülse parallel versetzt angeordnet ist zur Achse
(A2) der Drehscheibe, dass die Hülse ein gleichachsig angeordnetes Zahnrad (16) aufweist, welches mit einem Zahnkranz mit Innenverzahnung (12) einer unteren Drehscheibe (8) in Eingriff steht, deren Achse (A 2) mit derjenigen der oberen Drehscheibe (7) zusammenfällt.

8. Vorrichtung nach Anspruch 7, d a d u r c h   g e k e n n - z e i c h n e t,   d a s s   die beiden Drehscheiben (7, 8) mittels Kugellager (9, 10) auf einer Halterung (11) montiert sind und mittels Transmissionsriemen (28) antreibbar sind.

9. Vorrichtung nach einem der Ansprüche 5 bis 8,   d a d u r c h   g e k e n n z e i c h n e t,   d a s s   der Behälter (1) ein sich gegen unter etwa trichterförmig verjüngendes Dekantiergefäss mit einem Hahnen (3) am unteren Ende ist und dass das Dekantiergefäss gleichachsig mit einem zylindrischen Rohrstück (5) verbunden ist, welches in die Haltevorrichtung (27) einspannbar ist.

10. Vorrichtung nach Anspruch 9,   d a d u r c h   g e k e n n - z e i c h n e t,   d a s s   die Innenwandung des Behälters zur Verbesserung der Relativbewegung zwischen den beiden Phasen (24, 25) wenigstens teilweise mit in Achsrichtung verlaufenden Facetten (26) versehen ist.

0115743

FIG.1

FIG.2

0115743

FIG.3

21

27

29

15

16

13

14

FIG. 4

13

13

13

FIG. 5

FIG.6

0115743

FIG. 7

FIG. 8

0115743

Europäisches
Patentamt

**EUROPÄISCHER RECHERCHENBERICHT**

Nummer der Anmeldung

EP 83 81 0598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 157 217 (H. MASCRE)<br>* Seiten 1,2 *<br>--- | 1 | B 01 D 11/04<br>B 01 L 3/14 |
| Y | DE-A-2 830 440 (NATIONAL RESEARCH DEVELOPMENT)<br>* Seite 22, Zeilen 10-21; Seiten 23-42; Seite 43, Zeilen 1-17 *<br>--- | 1,2 | |
| A | US-A-3 709 665 (DALE M. COULSON)<br>----- | | |

| | RECHERCHIERTE SACHGEBIETE (Int. Cl. ³) |
|---|---|
| | B 01 D<br>B 01 L<br>B 01 F<br>G 01 N |

Der vorliegende Recherchenbericht wurde für alle Patentansprüche erstellt.

| Recherchenort | Abschlußdatum der Recherche | Prüfer |
|---|---|---|
| DEN HAAG | 11-05-1984 | DE PAEPE P.F.J. |